# EUROPÄISCHE PATENTSCHRIFT

(11) **EP 3 658 392 B1**
(45) Veröffentlichungstag und Bekanntmachung des Hinweises auf die Patenterteilung: **07.07.2021**
(21) Anmeldenummer: 18724795.2
(22) Anmeldetag: 03.05.2018
(51) Int. Cl.: B60C 11/12

(54) **LAUFSTREIFENPROFIL EINES FAHRZEUGREIFENS**
TREAD PROFILE OF A VEHICLE TIRE
PROFILÉ DE BANDE DE ROULEMENT D'UN PNEU DE VÉHICULE

(30) Priorität: 25.07.2017 DE 102017212710
(43) Veröffentlichungstag der Anmeldung: 03.06.2020
(73) Patentinhaber: Continental Reifen Deutschland GmbH, 30165 Hannover (DE)
(72) Erfinder: BERGER, Christoph, 30173 Hannover (DE); BAUER, Claudia, 31542 Bad Nenndorf (DE)
(74) Vertreter: Continental Corporation
(86) Internationale Anmeldenummer: PCT/EP2018/061256
(87) Internationale Veröffentlichungsnummer: WO 2019/020231

(56) Entgegenhaltungen:
- EP-A1- 2 821 258
- EP-A1- 2 913 205
- WO-A1-2014/051528
- WO-A1-2014/068385
- WO-A1-2016/156745
- WO-A1-2017/213230
- JP-A- 2016 084 082
- US-A1- 2009 159 167

## Beschreibung

Die Erfindung betrifft ein Laufstreifenprofil eines Fahrzeugreifens - insbesondere eines PKW-Fahrzeugreifens - mit durch Rillen voneinander getrennten Profilelementen, die nach radial außen von einer radial äußeren Oberfläche begrenzt werden, und mit in Profilelementen ausgebildeten Feineinschnitten, die in der radial äußeren Oberfläche und bis in eine Tiefe T₁ in den zur radial äußeren Oberfläche parallelen Schnittebenen jeweils längs einer im Wesentlichen in axialer Richtung A des Fahrzeugreifens erstreckten Haupterstreckungslinie g erstreckt sind und zumindest in einem Erstreckungsbereich aus mehreren ersten, zweiten, dritten und vierten Erstreckungsabschnitten ausgebildet sind, wobei die ersten und dritten Erstreckungsabschnitte jeweils parallel zur Haupterstreckungslinie g verlaufend ausgerichtet sind und längs der Haupterstreckungslinie g in alternierender Abfolge hintereinander angeordnet sind und wobei die ersten Erstreckungsabschnitte von den dritten Erstreckungsabschnitten sowohl in Erstreckungsrichtung als auch senkrecht zur Erstreckungsrichtung voneinander beabstandet angeordnet sind, wobei längs der Erstreckung des Feineinschnitts ausgehend vom Beginn des Erstreckungsbereichs bis zu seinem Erstreckungsende jeweils ein zweiter geradliniger Erstreckungsabschnitt das Ende eines ersten Erstreckungsabschnitts mit dem Anfang des nachfolgenden dritten Erstreckungsabschnitts und ein vierter Erstreckungsabschnitt das Ende eines dritten Erstreckungsabschnitts mit dem Anfang des nachfolgenden ersten Erstreckungsabschnitts verbindet, wobei die mittig zwischen den ersten und dritten Erstreckungsabschnitten gebildete Haupterstreckungslinie g eine Nulllinie des durch die ersten, zweiten, dritten und vierten Erstreckungsabschnitt gebildeten oszillierenden Verlaufes des Feineinschnitts bildet, welche durch die zweiten und vierten Erstreckungsabschnitte geschnitten wird.

Derartige Fahrzeugluftreifen sind bekannt.

Es ist bekannt, bei Fahrzeugluftreifen für Personenkraftwagen (Pkw) Laufstreifenprofile mit Profilblockelementen auszubilden, die durch Umfangsrillen und Querrillen voneinander getrennt sind. Die Umfangs- und Querrillen ermöglichen dabei den Wasserabfluss und darüber hinaus bieten die Querrillen Griffkanten zum Griff für Traktion und Bremsen und die Umfangsrillen Griff für Handling. Zur Erzielung guten Griffs gerade auf Schnee ist es darüber hinaus bekannt, in den Profilblockelementen zusätzliche Feineinschnitte auszubilden, die sich im Wesentlichen in Querrichtung des Fahrzeugluftreifens erstrecken. Die Feineinschnitte ermöglichen dabei ein Öffnen und Schließen des Feineinschnitts beim Durchlaufen des Reifenlatsches und dabei ein Aufnehmen und Einschließen von Schnee, wodurch der Schneegriff sowohl durch die zusätzlichen Griffkanten der Feineinschnitte als auch durch die durch Einschluss des Schnees erzeugte Schnee-Schnee-Reibung verbessert wird. Die Feineinschnitte führen jedoch zur Reduktion der Profilblocksteifigkeit, wodurch die Trockengriffeigenschaften, wie Trockenbremsen und Trocken-Traktion reduziert werden können.

Aus der DE 10 2014 226 453 A1 ist es bekannt, Fahrzeugluftreifen auszubilden, bei denen Feineinschnitte aus längs der Erstreckung des Einschnitts in der radial äußeren Oberfläche und parallel zur radial äußeren Oberfläche hintereinander angeordneten ersten und zweiten Erstreckungsabschnitten ausgebildet sind, die parallel zur Erstreckungsrichtung ausgerichtet und voneinander in Erstreckungsrichtung des Feineinschnittes und senkrecht hierzu beabstandet sind und jeweils durch Verbindungsabschnitte miteinander verbunden sind. Ein derartiger erster bzw. zweiter Erstreckungsabschnitt mit den beiden sich an ihn anschließenden Verbindungsabschnitten bildet dabei jeweils die kürzere Seite und die beiden Schenkel eines Trapezes, bei dem lediglich die längere Trapezseite fehlt. Der Feineinschnitt ist auf diese Weise aus sich an einer zwischen den ersten und zweiten Erstreckungsabschnitten gebildeten Mittellinie gespiegelten Trapezformen ausgebildet. Ein derartiger sich um die Mittellinie als Nulllinie oszillierender, trapezförmiger Feineinschnitt hat sich als sehr vorteilhaft erwiesen, da er mit seinen parallelen Erstreckungsabschnitten gute wirksame Griffkanten in Umfangsrichtung U und mit den Verbindungabschnitten gute wirksame Griffkanten in lateraler Richtung ermöglicht. Punktuelle Griffwirkungen - wie sie bekannten wellenlinienförmigen oder zickzackförmigen Feineinschnitten anhaften können - können mit derartigen trapezförmigen Feineinschnitten gut vermieden werden. Die derartig ausgebildeten Feineinschnitte sind dabei in radialer Richtung R des Reifens gesehen in den Schnittebenen, die senkrecht zur Erstreckungsrichtung des Feineinschnitts in der radial äußeren Oberfläche gebildet sind, üblicherweise geradlinig in radialer Richtung R erstreckt ausgebildet. Auch durch diese Feineinschnitte werden die Profilblockelemente weiterhin deutlich in ihrer Steifigkeit reduziert. Bei dieser Ausbildung sind die Trockeneigenschaften somit weiterhin unerwünscht beschränkt. Gerade bei besonders tiefen und lang ausgebildeten Feineinschnitten macht sich dies besonders stark bemerkbar. Besonders bei Pkw-Winterreifen mit einer besonders weichen Gummimischung, bei denen besonders lange und tiefe Feineinschnitte zur Erzielung guten Schneegriffs besonders wünschenswert sind, kommt dieser negative Effekt besonders stark zum Tragen. Darüber hinaus ist bei diesen Feineinschnitten eine gezielte Einstellung des Öffnungswinkels des Feineinschnittes kaum möglich.

Aus der EP 2026983 B1 ist es bekannt, derartige Feineinschnitte mit trapezförmigem Verlauf in der Oberfläche und in den dazu parallelen Ebenen auszubilden, wobei längs der radialen Erstreckung trapezförmige, oszillierende Verlauf gespiegelt ausgebildet ist. Hierdurch entsteht in alternierenden radialen übereinander ausgebildeten Erstreckungsbereichen jeweils ein parallel zur radial äußeren Oberfläche verlaufender trapezförmiger Verlauf, der jedoch von radialem Bereich zu radialem Bereich hin jeweils komplett an der Mittellinie des trapezförmigen Verlaufes gespiegelt ist. Somit wird ein dreidimensionales Profil innerhalb des Feineinschnittes gebildet, bei dem die trapezförmige Ausbeulung an einer Feineinschnittswand in die trapezförmige Ausnehmung der gegenüberliegenden Feineinschnittswand eingreift und bei dem radial unterhalb sowie längs der Haupterstreckungsrichtung des Feineinschnittes daneben angeordnet jeweils eine Ausbeulung der anderen Feineinschnittswand in die Ausnehmung der ersten Feineinschnittswand eingreift. Hierdurch entsteht ein kompliziertes Gebilde aus sich gegenseitig ineinander eingreifenden Ausbeulungen und Ausnehmungen der Feineinschnittswände. Hierdurch kann zwar eine sehr gute Versteifung des Feineinschnittes und des Profilelementes ermöglicht werden. Allerdings wird durch diese Ausbildung das Öffnen des Feineinschnittes im Fahreinsatz unter Handling- und Traktions- und Bremsbedingungen aufgrund des stark ineinander eingreifenden Systems auch stark unerwünscht behindert. Die gewünschte Schneegriffwirkung wird somit begrenzt. Eine Einstellung des Öffnungswinkels, das heißt eine Einstellung wie weit in dem definierten Belastungszustand der Feineinschnitt öffnen kann und soll, ist auch bei dieser Ausbildung kaum möglich.

Aus der EP 2913205 A1 ist es bekannt, derartige trapezförmige, oszillierende Feineinschnitte längs der radialen Erstreckung des Feineinschnitts mit einem längs einer Symmetrieachse ausgebildeten zickzackförmigen Konturverlauf auszubilden. Auch diese Ausbildung ermöglicht eine extreme Versteifung des Feineinschnittes durch ein starkes Verhaken in unterschiedlichen Ebenen zu Lasten der Trockengriffeigenschaften. Die starke Verhakung über die gesamte radiale Erstreckung des Feineinschnittes begrenzt das gewünschte Öffnen des Feineinschnittes. Eine gezielte Einstellung eines Öffnungswinkels ist auch bei dieser Ausbildung kaum möglich.

Somit liegt der Erfindung die Aufgabe zugrunde, ein Laufstreifenprofil eines Fahrzeugluftreifens mit Feineinschnitten bereitzustellen, die einerseits hochwirksame Griffkanten sowohl in Querrichtung als in Umfangsrichtung für guten Schneegriff bei Traktion, Bremsen und Handling ermöglichen und dabei eine zusätzliche gezielte Versteifung zur Verbesserung der Trockeneigenschaften bei guter Einstellbarkeit des Öffnungswinkels des Feineinschnittes ermöglicht.

Die Aufgabe wird erfindungsgemäß durch die Ausbildung eines Laufstreifenprofils eines Fahrzeugreifens - insbesondere eines PKW-Fahrzeugreifens - mit durch Rillen voneinander getrennten Profilelementen, die nach radial außen von einer radial äußeren Oberfläche begrenzt werden, und mit in Profilelementen ausgebildeten Feineinschnitten, die in der radial äußeren Oberfläche und bis in eine Tiefe T₁ in den zur radial äußeren Oberfläche parallelen Schnittebenen jeweils längs einer im Wesentlichen in axialer Richtung A des Fahrzeugreifens erstreckten Haupterstreckungslinie g erstreckt sind und zumindest in einem Erstreckungsbereich aus mehreren ersten, zweiten, dritten und vierten Erstreckungsabschnitten ausgebildet sind, wobei die ersten und dritten Erstreckungsabschnitte jeweils parallel zur Haupterstreckungslinie g verlaufend ausgerichtet sind und längs der Haupterstreckungslinie g in alternierender Abfolge hintereinander angeordnet sind und wobei die ersten Erstreckungsabschnitte von den dritten Erstreckungsabschnitten sowohl in Erstreckungsrichtung als auch senkrecht zur Erstreckungsrichtung voneinander beabstandet angeordnet sind, wobei längs der Erstreckung des Feineinschnitts ausgehend vom Beginn des Erstreckungsbereichs bis zu seinem Erstreckungsende jeweils ein zweiter geradliniger Erstreckungsabschnitt das Ende eines ersten Erstreckungsabschnitts mit dem Anfang des nachfolgenden dritten Erstreckungsabschnitts und ein vierter Erstreckungsabschnitt das Ende eines dritten Erstreckungsabschnitts mit dem Anfang des nachfolgenden ersten Erstreckungsabschnitts verbindet, wobei die mittig zwischen den ersten und dritten Erstreckungsabschnitten gebildete Haupterstreckungslinie g eine Nulllinie des durch die ersten, zweiten, dritten und vierten Erstreckungsabschnitt gebildeten oszillierenden Verlaufes des Feineinschnitts bildet, welche durch die zweiten und vierten Erstreckungsabschnitte geschnitten wird, gemäß den Merkmalen von Anspruch 1 gelöst, bei dem der Feineinschnitt zumindest innerhalb des Erstreckungsbereiches längs seiner Erstreckung über erste, zweite, dritte und vierte Erstreckungsabschnitte hinweg in den senkrecht zur Haupterstreckungslinie g gebildeten Schnittebenen ausgehend von der radial äußeren Oberfläche bis zur Tiefe T₁ einen im Wesentlichen in radialer Richtung erstreckten Schnittkonturverlauf aufweist, wobei er zumindest in einem ersten radial äußeren Erstreckungsabschnitt der Erstreckungshöhe hₐ ausgehend von der radial äußeren Oberfläche im Wesentlichen geradlinig in radialer Richtung R und in einem in radialer Richtung R nach innen daran anschließenden zweiten Erstreckungsabschnitt der Erstreckungshöhe hₘ mit hₘ > hₐ mit einer zu einer Seite von der Radialen wegweisenden Ausbauchung ausgebildet ist, wobei die Seite der Ausbauchung in den längs der Erstreckung der Haupterstreckungsrichtung g hintereinander ausgebildeten Schnittebenen des Erstreckungsbereichs die gleiche ist.

Durch diese Ausbildung wird es ermöglicht, mit Hilfe der ausgehend von der radial äußeren Oberfläche bis in die Tiefe T₁ hinweg in der radial äußeren Oberfläche sowie in den parallelen Oberflächen zur radial äußeren Oberfläche erfolgten Anordnung aus in Erstreckungsrichtung des Feineinschnittes längs der Erstreckungslinie g angeordneten ersten, zweiten, dritten und vierten Erstreckungsabschnitten den Feineinschnitt bis tief ins Profil hinein mit trapezförmig, oszillierendem Verlauf zu gestalten und somit die großen Vorteile der trapezförmigen Gestaltung der Oberflächenkontur sicherzustellen. Hierdurch kann über einen langen Lebenszeitraum des Reifens hinweg der Vorteil der trapezförmigen Kontur mit langen wirksamen Griffkanten in Umfangs- und Querrichtung optimiert weiter genutzt werden. Die gezielte Ausbildung der Schnittkontur in den senkrecht zur Erstreckungslinie g gebildeten Schnittebenen mit dem radial äußeren Erstreckungsabschnitt mit geradlinigen Schnittverlauf und dem sich nach radial innen anschließenden zweiten radialen Erstreckungsabschnitt mit genau einer Ausbauchung des Schnittkonturverlaufes aus der durch den ersten Erstreckungsabschnitt definierten radialen Erstreckungsverlaufes heraus wird eine gezielte Ausbauchung des Feineinschnittes zur einen Seite hin und somit in eine Drehrichtung des Reifens bewirkt. Diese Ausbauchung erstreckt sich dabei längs des Erstreckungsbereiches entlang der Erstreckungslinie g über die Verkettung der aneinander grenzenden Trapeze hinweg. Hierdurch kann eine gezielt eingestellte Versteifung in Umfangsrichtung U in definierter radialer Position des Reifens bewirkt werden. Ein chaotisches Ineinandergreifen und Verhaken der einen Feineinschnitt begrenzenden Feineinschnittswände über dessen Erstreckung hinweg wird somit vermieden. Gezieltes, eingestelltes ungehindertes Öffnen des Feineinschnitts beim Abrollen auf der Straße ist somit in einfacher Weise sichergestellt umsetzbar. Durch Wahl der Erstreckungshöhe hₐ des ersten radialen Erstreckungsabschnitts und der Erstreckungshöhe hₘ des zweiten radialen Erstreckungsabschnitt kann für den Betrieb des Reifens der gewünschte Öffnungswinkel gezielt eingestellt werden.

Besonders vorteilhaft ist die Ausbildung eines Fahrzeugreifens gemäß den Merkmalen von Anspruch 2, wobei hₐ mit 1mm ≤ hₐ und hₘ mit 2mm ≤ hₘ ≤ 4mm ausgebildet ist. Hierdurch kann eine besonders gleichbleibende Steifigkeit über die Lebenszeit des Reifenprofils einfach begünstigt werden.

Besonders vorteilhaft ist die Ausbildung eines Fahrzeugreifens gemäß den Merkmalen von Anspruch 3, wobei radial innerhalb der Position des zweiten radialen Erstreckungsabschnitts ein dritter radialer Erstreckungsabschnitt der Erstreckungshöhe h; - insbesondere mit 1mm ≤ hᵢ - angeordnet ist, der sich in radialer Richtung R nach außen bis zu diesem zweiten radialen Erstreckungsabschnitt und in radialer Richtung R nach innen hin bis in die Tiefe T₁ erstreckt, in dem der Schnittverlauf als über den zweiten radialen Erstreckungsabschnitt hinweg gebildete Verlängerung des ersten radialen Erstreckungsabschnitts im Wesentlichen geradlinig ausgebildet ist. Hierdurch kann gezielt das Flächenträgheitsmoment und die Steifigkeit den individuellen Erfordernissen entsprechend individuell verändert eingestellt werden.

Besonders vorteilhaft ist die Ausbildung eines Fahrzeugreifens gemäß den Merkmalen von Anspruch 4, wobei der zweite Erstreckungsabschnitt in radialer Richtung R nach innen hin bis zur Tiefe T₁ erstreckt ist. Hierdurch kann zusätzlich in einfacher Weise gezielt das Flächenträgheitsmoment und die Steifigkeit den individuellen Erfordernissen entsprechend eingestellt werden.

Besonders vorteilhaft ist die Ausbildung eines Fahrzeugreifens gemäß den Merkmalen von Anspruch 5, wobei die Schnittkontur des Feineinschnitts im zweiten radialen Erstreckungsabschnitt einen halbkreislinienförmigen Verlauf bildet. Diese Ausbildung ist besonders vorteilhaft zur Erzielung guter Versteifungswirkungen unter dynamischen Belastungsvorgängen, wie sie z.B. beim Abrollen des Reifens auftreten.

Besonders vorteilhaft ist die Ausbildung eines Fahrzeugreifens gemäß den Merkmalen von Anspruch 6, wobei der Feineinschnitt mit einer in radialer Richtung R gemessenen maximalen Tiefe T mit (1,5 T₁) ≥ T > T₁ ausgebildet ist und wobei der Feineinschnittsgrund längs seiner Erstreckung in der Tiefe T mit stetigem Verlauf auf einer zur Haupterstreckungslinie g gebildeten Parallelen ausgebildet ist. Hierdurch kann zusätzlich Kerbwirkungen im Feineinschnittgrund reduziert und eventuelle Rissbildungen weiter entgegengewirkt werden.

Besonders vorteilhaft ist die Ausbildung eines Fahrzeugreifens gemäß den Merkmalen von Anspruch 7, wobei die jeweils einen ersten bzw. einen dritten Erstreckungsabschnitt begrenzenden zweiten und vierten Erstreckungsabschnitte des Feineinschnitts jeweils einen Winkel a einschließen mit 40°≤α≤120°. Hierdurch können in einfacher Weise sehr zuverlässig besonders wirksame, projezierte Kantenlängen in axialer Richtung des Reifens zur Steigerung der Griffwirkung in seitlicher Richtung bereitgestellt werden.

Besonders vorteilhaft ist die Ausbildung eines Fahrzeugreifens gemäß den Merkmalen von Anspruch 8, wobei die jeweils einen ersten bzw. einen dritten Erstreckungsabschnitt begrenzenden zweiten und vierten Erstreckungsabschnitte des Feineinschnitts mit dem jeweils von ihnen begrenzten ersten und dritten Erstreckungsabschnitt jeweils einen Winkel β einschließen mit 100°≤β≤150°. Hierdurch kann in einfacher Weise sehr zuverlässig die Bereitstellung besonders wirksamer, projezierter Kantenlängen in axialer Richtung des Reifens zur Steigerung der Griffwirkung in seitlicher Richtung umgesetzt werden.

Besonders vorteilhaft ist die Ausbildung eines Fahrzeugreifens gemäß den Merkmalen von Anspruch 9, wobei die Ausbauchung in einer Richtung senkrecht zu einer durch den zweiten radialen Erstreckungsabschnitt gebildeten Verlängerung des Schnittverlaufs des ersten radialen Erstreckungsabschnitts bis in einem maximalen Abstand s von der Verlängerung erstreckt ist mit 0,5mm ≤ s ≤ 2mm. Hierdurch kann eine optimierte geometrische Umsetzung im Reifenprofil ermöglicht werden.

Besonders vorteilhaft ist die Ausbildung eines Fahrzeugreifens gemäß den Merkmalen von Anspruch 10, wobei die ersten und dritten Erstreckungsabschnitte mit einer Erstreckungslänge e mit 2mm ≤e≤6mm ausgebildet sind. Hierdurch kann in einfacher Weise ein sehr ausgewogenes Verhältnis zwischen guter Griffwirkung in Umfangsrichtung U zur Längskraftübertragung auf Schnee und guter Griffwirkung in axialer Richtung A zur Seitenkraftübertragung auf Schnee umgesetzt werden.

Besonders vorteilhaft ist die Ausbildung eines Fahrzeugreifens gemäß den Merkmalen von Anspruch 11, wobei der Feineinschnitt mit einem - insbesondere mit beiden - längs ihrer ersten Haupterstreckungsrichtung g gebildeten Erstreckungsende(n) in eine das Profilelement begrenzende Rille - insbesondere in eine Umfangsrille - mündet. Hierdurch können zusätzlich Griffecken im Übergang zwischen Feineinschnitt und Rille bereitgestellt werden.

Besonders vorteilhaft ist die Ausbildung eines Fahrzeugreifens gemäß den Merkmalen von Anspruch 12, wobei längs der Haupterstreckungslinie g außerhalb des Erstreckungsbereichs innerhalb der Bodenaufstandsbreite T_{A} im Übergang zu einer das Profilelement begrenzenden Rille ein kurzer Erstreckungsabschnitt der in Erstreckungsrichtung des Feineinschnitts gemessene Erstreckungslänge c mit 2mm≤c≤(b/2)des Feineinschnitts anschließt, in welchem der Schnittverlauf ausgehend von der radial äußeren Oberfläche bis zur T₁ im Wesentlichen geradlinig ausgebildet ist, wobei b die in Haupterstreckungsrichtung Feineinschnitts gemessene Erstreckungslänge des Erstreckungsbereichs bildet. Hierdurch kann eine zusätzliche Verbesserung des Abriebverhaltens des Reifens ermöglicht werden.

Besonders vorteilhaft ist die Ausbildung eines Fahrzeugreifens gemäß den Merkmalen von Anspruch 13, wobei das Profilelement ein Profilelement eines Schulterprofilbandes - insbesondere ein Profilblockelement einer Schulterprofilblockreihe - ist. Hierdurch wird die Versteifungswirkung in dem Reifenabschnitt umgesetzt, in dem sie aufgrund der Belastung im Betrieb besonders wirkungsvoll ist.

Die Erfindung wird im Folgenden an Hand der in den Figuren 1 bis 5 dargestellten Ausführungsbeispiele näher erläutert. Hierin zeigen
- Fig.1: ein Umfangsabschnitt des Laufstreifenprofils eines Fahrzeugluftreifens eines Personenkraftwagens (Pkw) in Draufsicht,
- Fig.2: einen Ausschnitt des Laufstreifenprofils von Fig.2 in vergrößerter Darstellung in Draufsicht,
- Fig.3: ein Profilblockelement des Laufstreifenprofilausschnitts von Fig.2 in Schnittdarstellung gemäß dem entlang des Konturverlaufs eines Feineinschnittes gebildeten Schnitts III-III von Fig.2 mit Blick auf eine Feineinschnittswand,
- Fig.4: den Feineinschnitt von Fig.3 in Schnittdarstellung gemäß Schnitt IV-IV von Fig.3 und
- Fig.5: den Feineinschnitt von Fig.3 in Schnittdarstellung gemäß Schnitt V-V von Fig.3.

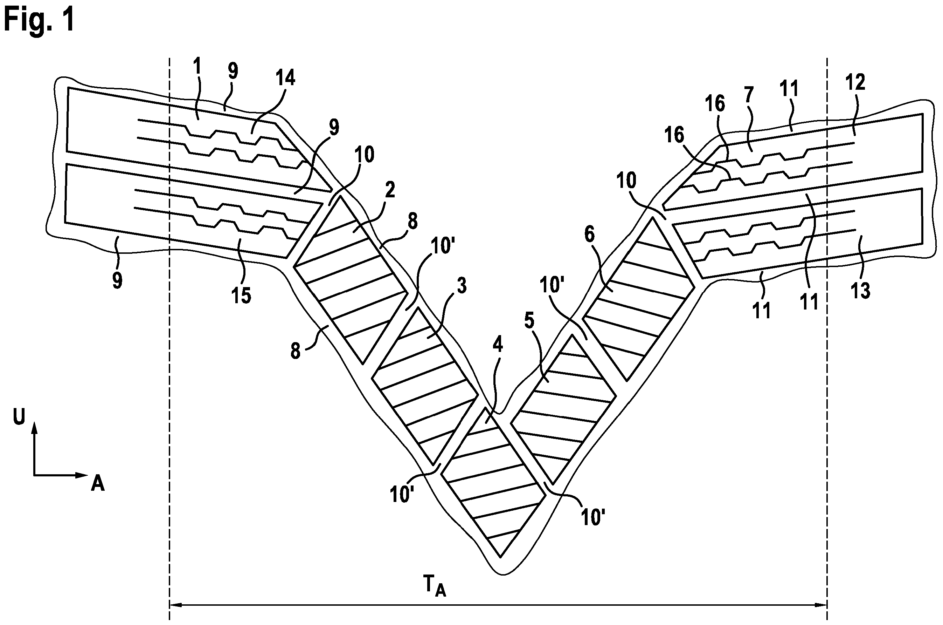

Fig.1 zeigt einen Abschnitt eines Winterreifenprofils eines Pkw-Fahrzeugluftreifens, bei dem in bekannter Weise in axialer Richtung A des Fahrzeugluftreifens nebeneinander angeordnet mehrere Profilblockreihen 1, 2, 3, 4, 5, 6 und 7 ausgebildet sind, welche sich jeweils über den gesamten Umfang des Fahrzeugluftreifens erstrecken und in Umfangsrichtung U des Fahrzeugluftreifens ausgerichtet sind. Die Profilblockreihe 1 bildet in bekannter Weise - wie in Figur 1 dargestellt ist - eine Schulterprofilblockreihe in der einen Reifenschulter. In analoger Weise bildet die Profilblockreihe 7 eine Schulterprofilblockreihe in der anderen Reifenschulter. Die Profilblockreihen 2, 3, 4, 5 und 6 sind in axialer Richtung A zwischen den beiden Profilblockreihen 1 und 7 angeordnet und bilden zentrale Profilblockreihen.

Wie in Fig.1 dargestellt ist, erstreckt sich die in axialer Richtung A gemessene Bodenaufstandsbreite T_{A} aus dem axialen Erstreckungsbereich der Profilblockreihe 1 bis in den axialen Erstreckungsbereich der Profilblockreihe 7.

Die Profilblockreihen 2, 3, 4, 5 und 6 sind in bekannter Weise jeweils aus über den Umfang des Fahrzeugluftreifens hinweg verteilten und in Umfangsrichtung U hintereinander angeordneten Profilblockelementen ausgebildet, welche jeweils durch schräg verlaufende Querrillen 8 voneinander getrennt sind.

Die Profilblockreihe 1 ist in bekannter Weise aus über den Umfang des Fahrzeugluftreifens in alternierender Abfolge hintereinander angeordneten Profilblockelementen 14, 15 bekannter Art ausgebildet. Die Profilblockreihe 7 ist in bekannter Weise aus über den Umfang des Fahrzeugluftreifens erstreckten und in alternierender Anordnung hintereinander angeordneten Profilblockelementen 12 und 13 bekannter Art ausgebildet. Die Profilblockelemente 14 und 15 der Profilblockreihe 1 sind jeweils durch Querrillen 9 voneinander getrennt. Die Profilblockelemente 12 und 13 der Profilblockreihe 7 sind in bekannter Weise durch Querrillen 11 voneinander getrennt.

Die Profilblockelemente 14 und 15 der Profilblockreihe 1 sind in bekannter Weise von den axial benachbarten Profilblockelementen der benachbarten Profilblockreihe 2 und somit von der Profilblockreihe 2 in axialer Richtung A des Fahrzeugluftreifens durch eine über den gesamten Umfang erstreckte - im Ausführungsbeispiel zickzackförmig verlaufende - Umfangsrille 10 bekannter Art getrennt. Die Profilblockelemente 12 und 13 der Profilblockreihe 7 sind von den axial benachbarten Profilblockelementen der benachbarten Profilblockreihe 6 und somit von der Profilblockreihe 6 in axialer Richtung A des Fahrzeugluftreifens durch eine über den gesamten Umfang erstreckte - im Ausführungsbeispiel zickzackförmig verlaufende - Umfangsrille 10 bekannter Art getrennt. Die Profilblockelemente der Profilblockreihe 2 sind von den axial benachbarten Profilblockelementen der Profilblockreihe 3 und somit von der Profilblockreihe 3 in axialer Richtung A durch Umfangsrillen 10' getrennt. Die Profilblockelemente der Profilblockreihe 3 sind von den axial benachbarten Profilblockelementen der Profilblockreihe 4 und somit von der Profilblockreihe 4 in axialer Richtung A durch Umfangsrillen 10' getrennt. Die Profilblockelemente der Profilblockreihe 4 sind von den axial benachbarten Profilblockelementen der Profilblockreihe 5 und somit von der Profilblockreihe 5 in axialer Richtung A durch Umfangsrillen 10' getrennt. Die Profilblockelemente der Profilblockreihe 5 sind von den axial benachbarten Profilblockelementen der Profilblockreihe 6 und somit von der Profilblockreihe 6 in axialer Richtung A durch Umfangsrillen 10' getrennt.

In einem dargestellten Ausführungsbeispiel bilden - wie in Fig. 1 zu erkennen ist - die Querrillen der Profilblockreihen 2, 3, 4, 5 und 6 in ihrer axialen Verlängerung eine gemeinsame V-förmige, sich durch die Profilblockreihen 2, 3, 4, 5 und 6 erstreckende Rille 8.

Die Rillen 9, 10, 10', 8 und 11 sind radialer Richtung R des Fahrzeugluftreifens nach innen hin jeweils durch ihren Rillengrund begrenzt. Die Profilblockelemente 14 und 15 der Profilblockreihe 1, die Profilblockelemente 12 und 13 der Profilblockreihe 11 sowie die Profilblockelemente der Profilblockreihen 2, 3, 4, 5, 6 sind in radialer Richtung R nach außen hin jeweils durch eine - innerhalb der Bodenaufstandsbreite T_{A} die Bodenkontaktfläche bildende - radial äußere Oberfläche 21 begrenzt.

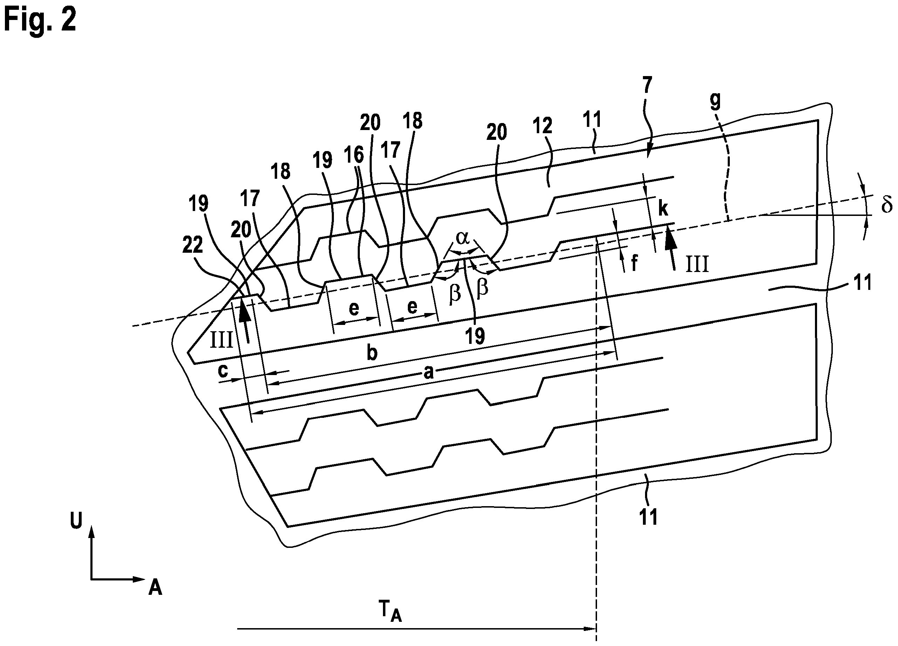

Wie in Fig.2 zu erkennen ist, ist in den radial äußeren Oberflächen 21 der Profilblockelemente 12 und 13 jeweils mehrere - im dargestellten Ausführungsbeispiel zwei - Feineinschnitte 16 in Umfangsrichtung U des Fahrzeugluftreifens hintereinander angeordnet. Die Feineinschnitte 16 erstrecken sich dabei längs einer unter Einschluss eines Neigungswinkels δ zur axialen Richtung A im Wesentlichen geradlinigen Erstreckungslinie g mit 0° ≤ δ ≤ 35°, beispielsweise mit δ = 20°.

Der Feineinschnitt 16 erstreckt sich dabei jeweils von der das Profilblockelement 12 bzw. 13 begrenzenden Umfangsrille 10 ausgehend in axialer Richtung A bis in eine Position außerhalb der Bodenaufstandsbreite T_{A}. Der Feineinschnitt 16 ist dabei längs der Erstreckungsrichtung der Erstreckungslinie g in Richtung von der Umfangsrille 10 zur Bodenaufstandsbreite T_{A} hin mit mehreren, in alternierender Anordnung hintereinander angeordneten und in Erstreckungsrichtung der Erstreckungslinie g voneinander beabstandeten ersten geradlinigen Erstreckungsabschnitten 17 und dritten geradlinigen Erstreckungsabschnitten 19 und mit in Erstreckungsrichtung der Erstreckungslinie g von der Umfangsrille 10 in Richtung zum axialen Rand der Bodenaufstandsbreite T_{A} hin gesehen mit zweiten Erstreckungsabschnitten 18, welche jeweils einen ersten Erstreckungsabschnitt 17 und einen in Erstreckungsrichtung nachfolgenden dritten Erstreckungsabschnitt 19 miteinander verbinden, und mit vierten Erstreckungsabschnitten 20, welche jeweils einen dritten Erstreckungsabschnitt 19 mit einem in Erstreckungsrichtung diesem nachgeordneten ersten Erstreckungsabschnitt 17 verbinden, ausgebildet.

Auf diese Weise sind längs der Erstreckungsrichtung der Erstreckungslinie g in wiederholter Abfolge jeweils ein erster Erstreckungsabschnitt 17, ein zweiter Erstreckungsabschnitt 18, ein dritter Erstreckungsabschnitt 19 und ein vierter Erstreckungsabschnitt 20 des Feineinschnitts 16 hintereinander angeordnet. Wie in Fig.2 zu erkennen ist, sind die ersten Erstreckungsabschnitte 17 jeweils auf einer gemeinsamen, parallel zur Erstreckungslinie g ausgerichteten Erstreckungslinie aufgereiht. Ebenso sind auch die dritten Erstreckungsabschnitte 19 auf einer anderen parallel zur Erstreckungslinie g ausgerichteten gemeinsamen Erstreckungslinie aufgereiht. Dabei ist die in Fig.2 eingetragene Erstreckungslinie g mittig zwischen der Position der Erstreckungslinie, auf der die ersten Erstreckungsabschnitte 17 aufgereiht sind, und der Position der Erstreckungslinie, auf der die dritten Erstreckungsabschnitte 19 aufgereiht sind. Die mittig dargestellte Erstreckungslinie g bildet somit eine Nulllinie des längs der Erstreckungslinie g mit Hilfe der ersten 17, zweiten 18, dritten 19 und vierten Erstreckungsabschnitte 10 oszillierenden Erstreckungsverlaufs des Feineinschnitts 16. Die zweiten Erstreckungsabschnitte 18 und die vierten Erstreckungsabschnitte 20 sind dabei jeweils unter Einschluss eines Neigungswinkels β zu der in der radial äußeren Oberfläche zur Erstreckungslinie g gebildeten Senkrechten ausgerichtet mit 100° ≤ β ≤ 150°, beispielsweise mit =110°. Dabei ist längs der Erstreckungslinie g gesehen die Neigungsrichtung der zweiten Erstreckungsabschnitte 18 und der vierten Erstreckungsabschnitte 20 entgegengesetzt zueinander gewählt. Der an einem ersten Erstreckungsabschnitt 17 angrenzende zweite Erstreckungsabschnitt 18 und der an diesen ersten Erstreckungsabschnitt 17 angrenzende vierte Erstreckungsabschnitt 20 schließen mit ihrer Ausrichtung einen Winkel α mit 40° ≤ α ≤ 120°.

Die ersten Erstreckungsabschnitte 17 und dritten Erstreckungsabschnitte 19 sind mit einer in Erstreckungsrichtung der Erstreckungslinie g gemessenen Erstreckungslänge e mit 2 mm ≤ e ≤ 6 mm ausgebildet.

Ein erster Erstreckungsabschnitt 17 bildet mit den angrenzenden zweiten 18 und vierten Erstreckungsabschnitt 20 drei Seiten eines Trapezes ohne die längere Grundseite. Ein dritter Erstreckungsabschnitt 19 bildet mit den angrenzenden zweiten 18 und vierten Erstreckungsabschnitt 20 drei Seiten eines an der Nulllinie demgegenüber gespiegelten Trapezes ohne längere Grundseite. Der Feineinschnitt 16 ist in der radial äußeren Oberfläche somit aus hintereinander angeordneten Trapezförmigen Abschnitten, in denen lediglich die längere Grundseite fehlt, ausgebildet.

Des Feineinschnitt 16 ist mit einer ausgehend von seiner Einmündung in die Umfangsrille 10 bis zum Ende der Bodenaufstandsbreite T_{A} in Erstreckungsrichtung der Erstreckungslinie g gemessenen Erstreckungslänge a mit 20mm ≤ a ≤ 100mm ausgebildet.

Der Feineinschnitt 16 ist in radialer Richtung R nach innen hin durch einen Feineinschnittsgrund 25 begrenzt und längs seiner Erstreckung mit einer Feineinschnittsdicke d mit 0,4 mm ≤ d ≤ 0,8 mm ausgebildet.

Der Feineinschnitt 16 ist dabei längs seiner radialen Erstreckung ausgehend von der radial äußeren Oberfläche 21 nach innen hin bis in eine Tiefe T₁ in allen parallel gebildeten Ebenen zur radial äußeren Oberfläche gesehen mit einem Konturverlauf ausgebildet, der dem oben beschriebenen in der radial äußeren Oberfläche ausgebildeten Konturverlauf entspricht und somit ebenfalls mit längs der Erstreckung der Erstreckungslinie g mit in der Abfolge hintereinander angeordnetem erstem Erstreckungsabschnitt 17, zweitem Erstreckungsabschnitt 18, drittem Erstreckungsabschnitt 19 und viertem Erstreckungsabschnitt 20 oszillierend um eine in Erstreckungsrichtung g gebildete Nulllinie verlaufend ausgebildet ist. Der Konturverlauf des Feineinschnitts 16 entspricht somit innerhalb der Bodenaufstandsbreite T_{A} bis in die Tiefe T₁ dem grundsätzlichen Verlauf wie er in Fig.1 und Fig.2 in der radial äußeren Oberfläche dargestellt ist.

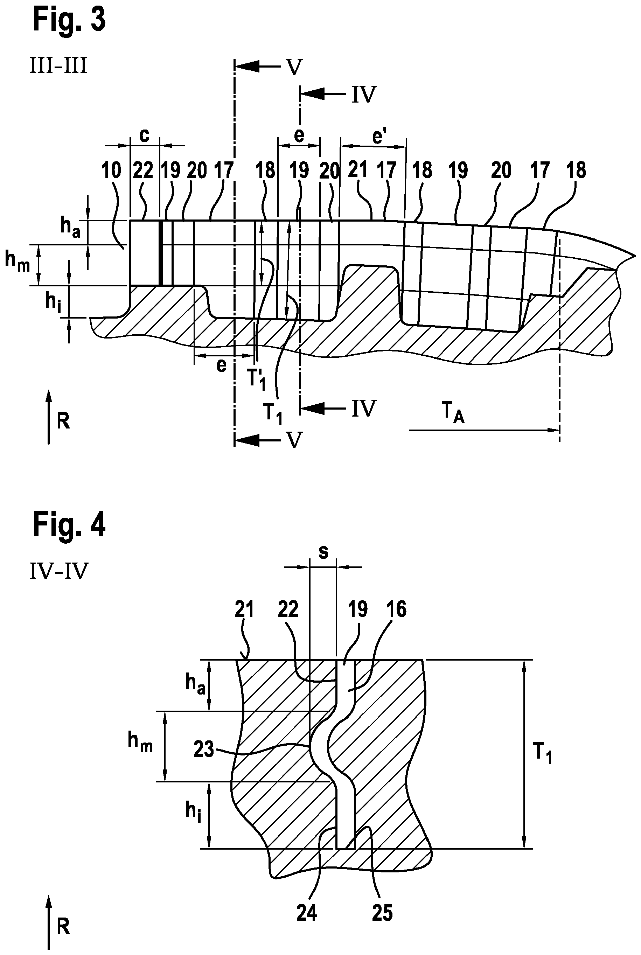

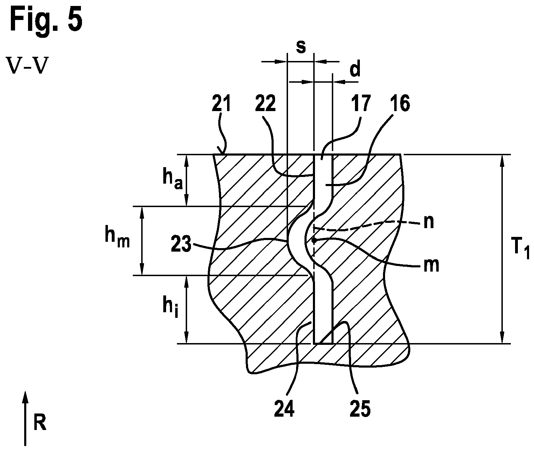

Dabei ist der Feineinschnitt 16 in den senkrecht zur Erstreckungslinie g gebildeten Schnittebenen von Fig.2 im Wesentlichen mit einer in radialer Richtung R nach innen hin ausgerichteten Schnittkontur ausgebildet. Die Schnittkontur ist dabei - wie in Fig.4 und Fig.5 zu erkennen - in einem radial ersten äußeren Erstreckungsabschnitt 22 der Erstreckungshöhe hₐ, welcher sich ausgehend von der radial äußeren Oberfläche 17 nach innen hin erstreckt, in allen senkrecht zur Erstreckungslinie g gebildeten Schnittebenen jeweils im Wesentlichen geradlinig in radialer Richtung R nach innen hin erstreckt ausgebildet. An den ersten radial äußeren Erstreckungsabschnitt 22 schließt in radialer Richtung R nach innen hin ein zweiter radialer Erstreckungsabschnitt 23 der Erstreckungshöhe hₘ an, in welchem in allen senkrecht zur Erstreckungslinie g gebildeten Schnittebenen des Feineinschnittes 16 der Feineinschnitt 16 mit einer zur jeweils gleichen in Umfangsrichtung U gerichteten Seite des Feineinschnittes 16 hinweisenden Ausbauchung ausgebildet ist. Die Ausbauchung des Verlauf des Feineinschnitts 16 ist dabei ausgehend von der radialen Position des Übergangs zwischen erstem radialen Erstreckungsabschnitt 22 zum zweiten radialen Erstreckungsabschnitt 23 längs der radialen Erstreckung des Feineinschnitts 16 nach innen hin zunächst unter stetiger degressiver Zunahme der Entfernung von der Position einer durch den zweiten radialen Erstreckungsabschnitt hindurch gebildeten geradlinigen Verlängerungslinie n des im ersten radialen Erstreckungsabschnitt ausgebildeten Feineinschnittsverlauf in Umfangsrichtung U bis zur Erreichung eines maximalen Abstands s zur Verlängerungslinie n und längs des weiteren radialen Erstreckungsverlaufs nach innen hin unter stetiger progressiver Abnahme des Abstandes zur Verlängerungslinie n bis zur radialen Position des radial inneren Erstreckungsendes des zweiten Erstreckungsabschnitts 23, in welcher die Kontur der Ausbauchung des Feineinschnitts 16 die Position der Verlängerungslinie n erreicht.

Die Ausbauchung ist somit in einer Richtung senkrecht zu einer durch den zweiten radialen Erstreckungsabschnitt 23 gebildeten Verlängerung n des Schnittverlaufs des ersten radialen Erstreckungsabschnitts 22 bis in den maximalen Abstand s von der Verlängerung n erstreckt mit 0,5 mm ≤ s ≤ 2 mm.

Im dargestellten Ausführungsbeispiel ist die im zweiten radialen Erstreckungsabschnitt 22 gebildete Ausbauchung dabei in der gezeigten Schnittkontur die Bogenlinie eines Halbkreises um einen Mittelpunkt M, welcher auf der radial nach innen hin gebildeten Verlängerungslinie n der geradlinig erstreckten Schnittkontur des ersten Erstreckungsabschnitts 22 nach innen liegt.

Unter der Ausbildung der Schnittkontur des Feineinschnitts 16 ist dabei jeweils die Schnittkontur der einen von den zweien den Feineinschnitt 16 beiderseits des Feineinschnittgrundes 25 begrenzenden Feineinschnittswände zu verstehen, welche sich parallel zu einander in radialer Richtung R nach außen bis zur radial äußeren Oberfläche 21 mit Abstand d zu einander erstrecken und mit zueinander korrespondierender Schnittkontur ausgebildet sind.

Wie in den Figuren 4 und 5 beispielhaft dargestellt ist, schließt sich in radialer Richtung nach innen hin an den zweiten Erstreckungsabschnitt 23 jeweils ein dritter Erstreckungsabschnitt 24 der radialen Erstreckungshöhe hᵢ an, in welchem der Feineinschnitt 16 in den senkrecht zur Erstreckungslinie g gebildeten Schnittebenen ebenfalls wie im ersten radiale Erstreckungsabschnitt 22 mit geradliniger Schnittkontur erstreckt ausgebildet ist. Im dargestellten Ausführungsbeispiel liegt der Erstreckungsabschnitt 24 mit seiner geradlinigen Erstreckung auf der geradlinigen Verlängerung n des radial äußeren Erstreckungsabschnitts 22.

Die Tiefe T₁ ist mit T₁ = (hₐ + hᵢ + hₘ) ausgebildet. Die Erstreckungshöhe hₘ ist mit hₘ > hᵢ und mit hₘ > ha ausgebildet.

Dabei sind die Erstreckungshöhen hₐ mit 1 mm ≤ hₐ und hₘ mit 2 mm ≤ hₘ ≤ 4mm - beispielsweise mit hₘ = 2,8 mm - gewählt ausgebildet. Die Erstreckungshöhe hᵢ ist mit 1 mm ≤ hᵢ ausgebildet.

In einem Ausführungsbeispiel ist dabei der Feineinschnitt 16 längs seiner gesamten Erstreckung entlang der Erstreckungslinie g ausgehend von der Umfangsrille 10 bis zum Rand der Bodenaufstandsbreite T_{A} mit einer Tiefe T₁ ausgebildet.

In einem anderen in Fig.3 dargestellten Ausführungsbeispiel ist der Feineinschnitt 16 in seinem Übergang zur Umfangsrille 10 mit einer Tiefe T'₁ ausgebildet, mit T'₁ = (h + hₘ).

In einem weiteren, ebenfalls in Fig.3 dargestellten Ausführungsbeispiel ist längs eines einzelnen ersten Erstreckungsabschnitts 17 der Feineinschnittsgrund 25 des Feineinschnitts 16 noch etwas erhöht ausgebildet, so dass die dort wirksame Höhe hₘ etwa halb so groß ist wie in den benachbarten Erstreckungsbereichen 20 und 18, der Erstreckungsbereiche 19 und der anderen ersten Erstreckungsbereiche 17 des Feineinschnitts 16.

Fig.3 und Fig.2 zeigen ein weiteres Ausführungsbeispiel, bei welchem der Feineinschnitt 16 im Übergang zur Umfangsrille 10 hin in einem an die Umfangsrille 10 anschließenden Erstreckungsabschnitt der Erstreckungslänge c in den senkrecht zur Erstreckungslinie g gebildeten Schnittebenen mit einem radialen Erstreckungsverlauf ausgebildet ist, bei welchem der Feineinschnitt 16 längs seiner gesamten radialen Erstreckung ausgehend von der radial äußeren Oberfläche 21 bis in die Tiefe T₁' mit geradliniger in radialer Erstreckungsrichtung ausgerichtetem Schnittkonturverlauf ausgebildet ist. Die Erstreckungslänge c ist mit 2 mm ≤ c ≤ (b/2) ausgebildet, wobei b die in Erstreckungsrichtung der Erstreckungslinie g und somit in Haupterstreckungsrichtung des Feineinschnitts 16 gemessene Erstreckungslänge des innerhalb der Bodenaufstandsbreite T_{A} gebildeten Erstreckungsbereichs des Feineinschnitts 16 bildet. Beispielsweise ist c = 2mm gewählt.

Darüber hinaus ist der Feineinschnitt 16 - wie in Fig.3 dargestellt ist - in einem weiteren Ausführungsbeispiel auch in seinem außerhalb der Bodenaufstandsbreite T_{A} auslaufenden Erstreckungsabschnitt längs seiner gesamten radialen Erstreckung in den Schnittebenen senkrecht zur Erstreckungslinie g geradlinig in radialer Richtung R erstreckter Schnittkontur ausgebildet.

Wie in Fig.2 zu erkennen ist, sind die im Profilblockelement 12 ausgebildeten Feineinschnitte 16 jeweils mit in der radial äußeren Oberfläche 21 ausgebildetem Abstand k zueinander angeordnet mit 3 mm ≤ k ≤ 6 mm.

Die Erstreckungslinien g erstrecken sich im dargestellten Ausführungsbeispiel parallel zu den die Profilblockelemente 12 und 13 in Umfangsrichtung U voneinander trennenden Querrillen 11.

Auch wenn die Feineinschnitte 16 nur am Beispiel der Profilblockelemente 12 beschrieben sind, sind diese in analoger Weise auch in den Profilblockelementen 13 ausgebildet.

Innerhalb eines Profilblockelementes 12 bzw. 13 sind jeweils zwei bis fünf derartige Feineinschnitte ausgebildet.

Die Profilblockelemente 14 und 15 der Profilblockreihen 1 sind in einem Ausführungsbeispiel ebenfalls in analoger Weise mit derartigen Feineinschnitten 16 ausgebildet.

In einer weiteren alternativen Ausführung sind die Feineinschnitte 16 längs der Erstreckung bis in die Tiefe T₁' mit dem ersten radialen Erstreckungsabschnitt 22 und dem zweiten radialen Erstreckungsabschnitt 23 - wie bereits dargelegt - ausgeführt. Allerdings ist der Feineinschnittsgrund 21 in den mit der Tiefe T₁ ausgebildeten Erstreckungsabschnitten des Feineinschnitts 16 längs einer Parallelen zur Erstreckungslinie g geradlinig erstreckt ausgebildet. Bei dieser Ausführung ist der dritte radial innere Erstreckungsabschnitt 24 in den senkrecht zur Erstreckungslinie g ausgebildeten Schnittebenen wie oben dargelegt von radial außen nach radial innen hin geradlinig erstreckt ausgebildet. Er bildet dabei jedoch nicht in allen senkrecht zur Erstreckungslinie g gebildeten Schnittebenen mit seiner Schnittkontur die geradlinige Verlängerung der Schnittkontur des ersten Erstreckungsabschnittes 22, sondern verbindet mit seiner Schnittkontur geradlinig das jeweilige radial innere Erstreckungsende des zweiten radialen Erstreckungsabschnitts 23, welcher Teil des in radialer Richtung im Abstand T'₁ von der radial äußeren Oberfläche 21 zur radial äußeren Oberfläche 21 gebildeten trapezförmigen Verlaufes der Feineinschnittskontur ist, mit dem parallel zur Erstreckungslinie g geradlinig erstreckten Feineinschnittsgrund 25.

### Bezugszeichenliste

### (Teil der Beschreibung)

- 1: Profilblockreihe
- 2: Profilblockreihe
- 3: Profilblockreihe
- 4: Profilblockreihe
- 5: Profilblockreihe
- 6: Profilblockreihe
- 7: Profilblockreihe
- 8: Schrägrille
- 9: Querrille
- 10: Umfangsrille
- 11: Querrille
- 12: Profilblockelement
- 13: Profilblockelement
- 14: Profilblockelement
- 15: Profilblockelement
- 16: Feineinschnitt
- 17: Erster Erstreckungsabschnitt
- 18: Zweiter Erstreckungsabschnitt
- 19: Dritter Erstreckungsabschnitt
- 20: Vierter Erstreckungsabschnitt
- 21: Radial äußere Oberfläche
- 22: Radial erster Erstreckungsabschnitt
- 23: Radial zweiter Erstreckungsabschnitt
- 24: Radial dritter Erstreckungsabschnitt
- 25: Feineinschnittsgrund

## Patentansprüche

1. Laufstreifenprofil eines Fahrzeugreifens - insbesondere eines PKW-Fahrzeugreifens - mit durch Rillen voneinander getrennten Profilelementen, die nach radial außen von einer radial äußeren Oberfläche (17) begrenzt werden, und mit in Profilelementen (13) ausgebildeten Feineinschnitten (16), die in der radial äußeren Oberfläche (21) und bis in eine Tiefe T₁ in den zur radial äußeren Oberfläche (21) parallelen Schnittebenen jeweils längs einer im Wesentlichen in axialer Richtung A des Fahrzeugreifens erstreckten Haupterstreckungslinie g erstreckt sind und zumindest in einem Erstreckungsbereich aus mehreren ersten (17), zweiten (18), dritten (19) und vierten (20) Erstreckungsabschnitten ausgebildet sind, wobei die ersten (17) und dritten (19) Erstreckungsabschnitte jeweils parallel zur Haupterstreckungslinie g verlaufend ausgerichtet sind und längs der Haupterstreckungslinie g in alternierender Abfolge hintereinander angeordnet sind und wobei die ersten Erstreckungsabschnitte (17) von den dritten Erstreckungsabschnitten (19) sowohl in Erstreckungsrichtung als auch senkrecht zur Erstreckungsrichtung voneinander beabstandet angeordnet sind, wobei längs der Erstreckung des Feineinschnitts (16) ausgehend vom Beginn des Erstreckungsbereichs bis zu seinem Erstreckungsende jeweils ein zweiter geradliniger Erstreckungsabschnitt (18) das Ende eines ersten Erstreckungsabschnitts (17) mit dem Anfang des nachfolgenden dritten Erstreckungsabschnitts (19) und ein vierter Erstreckungsabschnitt (10) das Ende eines dritten Erstreckungsabschnitts (19) mit dem Anfang des nachfolgenden ersten Erstreckungsabschnitts (17) verbindet, wobei die mittig zwischen den ersten (17) und dritten (19) Erstreckungsabschnitten gebildete Haupterstreckungslinie g eine Nulllinie des durch die ersten (17), zweiten(18), dritten (19) und vierten (20) Erstreckungsabschnitte gebildeten oszillierenden Verlaufes des Feineinschnitts (16) bildet, welche durch die zweiten (18) und vierten (20) Erstreckungsabschnitte geschnitten wird, wobei der Feineinschnitt (16) zumindest innerhalb des Erstreckungsbereiches längs seiner Erstreckung über erste (17), zweite (18), dritte (19) und vierte (20) Erstreckungsabschnitte hinweg in den senkrecht zur Haupterstreckungslinie g gebildeten Schnittebenen ausgehend von der radial äußeren Oberfläche (21) bis zur Tiefe T₁ einen im Wesentlichen in radialer Richtung R erstreckten Schnittverlauf aufweist, **dadurch gekennzeichnet,**
**dass** der Feineinschnitt (16) zumindest in einem ersten radial äußeren Erstreckungsabschnitt (22) der Erstreckungshöhe hₐ ausgehend von der radial äußeren Oberfläche (21) im wesentlichen geradlinig **in radialer Richtung R** und in einem in radialer Richtung R nach innen daran anschließenden zweiten Erstreckungsabschnitt (23) der Erstreckungshöhe hₘ mit hₘ > hₐ zu einer Seite von der Radialen wegweisenden Ausbauchung ausgebildet ist, wobei die Seite der Ausbauchung in den längs der Erstreckung der Haupterstreckungsrichtung g hintereinander ausgebildeten Schnittebenen des Erstreckungsbereichs die gleiche ist.

2. Laufstreifenprofil gemäß den Merkmalen von Anspruch 1,
wobei hₐ mit 1 mm ≤ hₐ und hₘ mit 2 mm ≤ hₘ ≤ 4 mm ausgebildet ist.

3. Laufstreifenprofil gemäß den Merkmalen von Anspruch 1 oder 2,
wobei radial innerhalb der Position des zweiten radialen Erstreckungsabschnitts (23) ein dritter radialer Erstreckungsabschnitt (24) der Erstreckungshöhe hᵢ - insbesondere mit 1 mm ≤ hᵢ - angeordnet ist, der sich in radialer Richtung R nach außen bis zu diesem zweiten radialen Erstreckungsabschnitt (23) und in radialer Richtung R nach innen hin bis in die Tiefe T₁ erstreckt, in dem der Schnittverlauf als über den zweiten radialen Erstreckungsabschnitt (23) hinweg gebildete Verlängerung des ersten radialen Erstreckungsabschnitts (22) im Wesentlichen geradlinig ausgebildet ist.

4. Laufstreifenprofil gemäß den Merkmalen von Anspruch 1 oder 2,
wobei der zweite radiale Erstreckungsabschnitt (23) in radialer Richtung R nach innen hin bis zur Tiefe T₁ erstreckt ist.

5. Laufstreifenprofil gemäß den Merkmalen von einem der Ansprüche 1 bis 4,
wobei die Schnittkontur des Feineinschnitts (16) im zweiten radialen Erstreckungsabschnitt (23) einen halbkreislinienförmigen Verlauf bildet.

6. Laufstreifenprofil gemäß den Merkmalen von einem der vorangegangenen Ansprüche,
wobei der Feineinschnitt (16) mit einer in radialer Richtung R gemessenen maximalen Tiefe T mit (1,5 T₁) ≥ T > T₁ ausgebildet ist, und
wobei der Feineinschnittsgrund (25) längs seiner Erstreckung in der Tiefe T mit stetigem Verlauf auf einer zur Haupterstreckungslinie g gebildeten Parallelen ausgebildet ist.

7. Laufstreifenprofil gemäß den Merkmalen von einem der vorangegangenen Ansprüche,
wobei die jeweils einen ersten (17) bzw. einen dritten (19) Erstreckungsabschnitt begrenzenden zweiten (18) und vierten (20) Erstreckungsabschnitte des Feineinschnitts (16) jeweils einen Winkel α einschließen mit 40°≤α≤120°.

8. Laufstreifenprofil gemäß den Merkmalen von einem der vorangegangenen Ansprüche,
wobei die jeweils einen ersten (17) bzw. einen dritten (19) Erstreckungsabschnitt begrenzenden zweiten (18) und vierten (20) Erstreckungsabschnitte des Feineinschnitts (16) mit dem jeweils von ihnen begrenzten ersten (17) und dritten (19) Erstreckungsabschnitt jeweils einen Winkel β einschließen mit 100° ≤ β ≤ 150°.

9. Laufstreifenprofil gemäß den Merkmalen von einem der vorangegangenen Ansprüche,
wobei die Ausbauchung in einer Richtung senkrecht zu einer durch den zweiten radialen Erstreckungsabschnitt (23) gebildeten Verlängerung (n) des Schnittverlaufs des ersten radialen Erstreckungsabschnitts (22) bis in einem maximalen Abstand s von der Verlängerung (n) erstreckt ist mit 0,5 mm ≤ s ≤ 2 mm.

10. Laufstreifenprofil gemäß den Merkmalen von einem der vorangegangenen Ansprüche,
wobei die ersten (17) und dritten (19) Erstreckungsabschnitte mit einer Erstreckungslänge e mit 2 mm ≤ e ≤ 6mm ausgebildet sind.

11. Laufstreifenprofil gemäß den Merkmalen von einem der vorangegangenen Ansprüche,
wobei der Feineinschnitt (16) mit einem - insbesondere mit beiden - längs ihrer ersten Haupterstreckungsrichtung g gebildeten Erstreckungsende(n) in eine das Profilelement (12,13) begrenzende Rille - insbesondere in eine Umfangsrille (10) - mündet.

12. Laufstreifenprofil gemäß den Merkmalen von einem der vorangegangenen Ansprüche,
wobei längs der Haupterstreckungslinie g außerhalb des Erstreckungsbereichs innerhalb der Bodenaufstandsbreite T_{A} im Übergang zu einer das Profilelement (12,13) begrenzenden Rille (10) ein kurzer Erstreckungsabschnitt der in Erstreckungsrichtung des Feineinschnitts (16) gemessenen Erstreckungslänge c mit 2 mm ≤ c ≤ (b/2) des Feineinschnitts (16) anschließt, in welchem der Schnittverlauf ausgehend von der radial äußeren Oberfläche (21) bis zur Tiefe T₁ im Wesentlichen geradlinig ausgebildet ist, wobei b die in Haupterstreckungsrichtung des Feineinschnitts (16) gemessene Erstreckungslänge des Erstreckungsbereichs bildet.

13. Laufstreifenprofil gemäß den Merkmalen von einem der vorangegangenen Ansprüche,
wobei das Profilelement ein Profilelement eines Schulterprofilbandes - insbesondere ein Profilblockelement (12) einer Schulterprofilblockreihe (7) - ist.

## Claims

1. Tread profile of a vehicle tyre - in particular of a passenger motor vehicle tyre - having profile elements which are separated from one another by channels and which are delimited radially to the outside by a radially outer surface (17), and having sipes (16) which are formed in profile elements (13) and which, in the radially outer surface (21) and in the section planes parallel to the radially outer surface (21) as far as a depth T₁, extend in each case along a main line of extent g extending substantially in an axial direction A of the vehicle tyre and which, at least in one region of extent, are formed from multiple first (17), second (18), third (19) and fourth (20) sections of extent, wherein the first (17) and third (19) sections of extent are oriented so as to run in each case parallel to the main line of extent g and are arranged one behind the other in an alternating sequence along the main line of extent g, and wherein the first sections of extent (17) and the third sections of extent (19) are arranged spaced apart from one another both in a direction of extent and perpendicular to the direction of extent, wherein, along the extent of the sipe (16) proceeding from the beginning of the region of extent as far as the end of extent thereof, in each case one second rectilinear section of extent (18) connects the end of a first section of extent (17) to the start of the subsequent third section of extent (19), and a fourth section of extent (10) connects the end of a third section of extent (19) to the start of the subsequent first section of extent (17), wherein the main line of extent g formed centrally between the first (17) and third (19) sections of extent forms a zero line of the oscillating course of the sipe (16) formed by the first (17), second (18), third (19) and fourth (20) sections of extent, which zero line is intersected by the second (18) and fourth (20) sections of extent, wherein the sipe (16), at least within the region of extent along its extent across first (17), second (18), third (19) and fourth (20) sections of extent, in the section planes formed perpendicular to the main line of extent g from the radially outer surface (21) as far as the depth T₁, has a cut profile which extends substantially in a radial direction R,
**characterized**
**in that** the sipe (16), at least in a first, radially outer section of extent (22) of the extent height (hₐ) proceeding from the radially outer surface (21), is formed so as to be substantially rectilinear in the radial direction R, and, in a second section of extent (23), adjoining this to the inside in the radial direction R, of the extent height hₘ, where hₘ > hₐ, is formed with a bulge pointing to one side away from the radial, wherein the side of the bulge is the same in the section planes of the region of extent formed one behind the other along the extent of the main direction of extent g.

2. Tread profile according to the features of Claim 1,
wherein hₐ is configured such that 1 mm ≤ hₐ, and hₘ is configured such that 2 mm ≤ hₘ ≤ 4 mm.

3. Tread profile according to the features of Claim 1 or 2,
wherein, radially within the position of the second radial section of extent (23), there is arranged a third radial section of extent (24) of extent height hᵢ, in particular where 1 mm ≤ hᵢ, which extends outwards in the radial direction R as far as said second radial section of extent (23) and inwards in the radial direction R as far as the depth T₁, and in which the cut profile is formed substantially rectilinearly as an elongation of the first radial section of extent (22) across the second radial section of extent (23).

4. Tread profile according to the features of Claim 1 or 2,
wherein the second radial section of extent (23) extends inwards in the radial direction R as far as the depth T₁.

5. Tread profile according to the features of any of Claims 1 to 4,
wherein the cut contour of the sipe (16) in the second radial section of extent (23) forms a profile in the shape of a semicircular line.

6. Tread profile according to the features of any of the preceding claims,
wherein the sipe (16) is formed with a maximum depth T measured in the radial direction R, where (1.5 T₁) ≥ T > T₁, and
wherein the sipe base (25), along its extent at the depth T, is formed with a continuous profile on a parallel formed relative to the main line of extent g.

7. Tread profile according to the features of any of the preceding claims,
wherein the second (18) and fourth (20) sections of extent, which delimit in each case one first (17) and one third (19) section of extent respectively, of the sipe (16) each enclose an angle a, where 40° ≤ α ≤ 120°.

8. Tread profile according to the features of any of the preceding claims,
wherein the second (18) and fourth (20) sections of extent, which delimit in each case one first (17) and one third (19) section of extent respectively, of the sipe (16) each enclose an angle β, where 100° ≤ β ≤ 150°, with the first (17) and third (19) sections of extent respectively delimited by them.

9. Tread profile according to the features of any of the preceding claims,
wherein the bulge extends in a direction perpendicular to an elongation (n), formed by the second radial section of extent (23), of the cut profile of the first radial section of extent (22) as far as a maximum distance s from the elongation (n), where 0.5 mm ≤ s ≤ 2 mm.

10. Tread profile according to the features of any of the preceding claims, wherein the first (17) and third (19) sections of extent are formed with an extent length e, where 2 mm ≤ e ≤ 6 mm.

11. Tread profile according to the features of any of the preceding claims,
wherein the sipe (16) opens with one - in particular with both - end(s) of extent formed along their first main direction of extent g into a channel which delimits the profile element (12, 13), in particular into a circumferential channel (10).

12. Tread profile according to the features of any of the preceding claims,
wherein, along the main line of extent g outside the region of extent within the ground contact patch width T_{A}, at the transition to a channel (10) which delimits the profile element (12, 13), there is an adjoining short section of extent, of extent length c measured in the direction of extent of the sipe (16), where 2 mm ≤ c ≤ (b/2), of the sipe (16), in which the cut profile is of substantially rectilinear form from the radially outer surface (21) as far as the depth T₁, wherein b forms the extent length, measured in the main direction of extent of the sipe (16), of the region of extent.

13. Tread profile according to the features of any of the preceding claims,
wherein the profile element is a profile element of a shoulder profile band - in particular a profile block element (12) of a shoulder profile block row (7) .

## Revendications

1. Sculpture de bande de roulement d'un pneumatique de véhicule, en particulier d'un pneumatique de voiture particulière, ladite sculpture comprenant des éléments de sculpture, qui sont séparés les uns des autres par des rainures et qui sont délimités radialement vers l'extérieur par une surface radialement extérieure (17), et de fines incisions (16) qui sont ménagées dans les éléments de sculpture (13) et qui s'étendent dans la surface radialement extérieure (21) et ce jusqu'à une profondeur T₁ dans les plans de coupe parallèles à la surface radialement extérieure (21) à chaque fois le long d'une ligne d'extension principale g s'étendant sensiblement dans la direction axiale A du pneumatique de véhicule et qui sont formées au moins dans une région d'extension comprenant une pluralité de première (17), deuxième (18), troisième (19) et quatrième (20) portions d'extension, les première (17) et troisième (19) portions d'extension étant chacune orientées parallèlement à la ligne d'extension principale g et étant disposées l'une derrière l'autre suivant une séquence alternée le long de la ligne d'extension principale g, et les premières portions d'extension (17) étant disposées de manière espacées les unes des autres par des troisièmes portions d'extension (19) aussi bien dans la direction d'extension que perpendiculairement à la direction d'extension, une deuxième portion d'extension rectiligne (18) reliant l'extrémité d'une première portion d'extension (17) au début de la troisième portion d'extension suivante (19) et une quatrième portion d'extension (10) reliant l'extrémité d'une troisième portion d'extension (19) au début de la première portion d'extension suivante (17) le long de l'extension de la fine incision (16), à partir du début de la région d'extension jusqu'à son extrémité d'extension, la ligne d'extension principale g formée au centre entre les première (17) et troisième (19) portions d'extension étant une ligne de référence du tracé oscillant de la fine incision (16) qui est formé par les première (17), deuxième (18), troisième (19) et quatrième (20) portions d'extension et qui est coupé par les deuxième (18) et quatrième (20) portions d'extension, la fine incision (16) présentant un tracé de coupe, qui s'étend sensiblement dans la direction radiale R, au moins dans la région d'extension le long de son extension par-delà les première (17), deuxième (18), troisième (19) et quatrième (20) portions d'extension dans les plans de coupe, formés perpendiculairement à la ligne d'extension principale g, à partir de la surface radialement extérieure (21) jusqu'à la profondeur T₁,
**caractérisé en ce que**
la fine incision (16) est formée d'un côté par un renflement, dirigée dans la direction opposée à la direction radiale, au moins dans une première portion d'extension radialement extérieure (22) de la hauteur d'extension hₐ à partir de la surface radialement extérieure (21) de manière sensiblement rectiligne dans la direction radiale R et dans une deuxième portion d'extension (23), faisant suite à la première vers l'intérieur dans la direction radiale R, de la hauteur d'extension hₘ, hₘ > hₐ, le côté du renflement étant le même dans les plans de coupe de la région d'extension qui sont formés les uns derrière les autres le long de l'extension de la direction d'extension principale g.

2. Sculpture de bande de roulement selon les caractéristiques de la revendication 1,
hₐ étant tel que 1 mm ≤ hₐ et hₘ étant tel que 2 mm ≤ hₘ ≤ 4 mm.

3. Sculpture de bande de roulement selon les caractéristiques de la revendication 1 ou 2,
une troisième portion d'extension radiale (24) de la hauteur d'extension hᵢ, en particulier 1 mm ≤ hᵢ, étant disposée radialement à l'intérieur de la position de la deuxième portion d'extension radiale (23) et s'étendant vers l'extérieur dans la direction radiale R jusqu'à cette deuxième portion d'extension radiale (23) et vers l'intérieur dans la direction radiale R jusqu'à la profondeur T₁, dans laquelle le tracé de coupe est conçu de manière sensiblement rectiligne comme un prolongement de la première portion d'extension radiale (22) qui est formé par-delà la deuxième portion d'extension radiale (23).

4. Sculpture de bande de roulement selon les caractéristiques de la revendication 1 ou 2, la deuxième portion d'extension radiale (23) s'étendant vers l'intérieur dans la direction radiale R jusqu'à la profondeur T₁.

5. Sculpture de bande de roulement selon les caractéristiques de l'une des revendications 1 à 4,
le contour de coupe de la fine incision (16) formant un tracé semi-circulaire dans la deuxième portion d'extension radiale (23).

6. Sculpture de bande de roulement selon les caractéristiques de l'une des revendications précédentes,
la fine incision (16) étant formée avec une profondeur maximale T, mesurée dans la direction radiale R, telle qu'avec (1,5 T₁) ≥ T > T₁, et
le fond (25) de la fine incision étant formé le long de son extension dans la profondeur T avec un tracé continu sur une parallèle à la ligne d'extension principale g.

7. Sculpture de bande de roulement selon les caractéristiques de l'une des revendications précédentes,
les deuxième (18) et quatrième (20) portions d'extension de la fine incision (16), qui délimitent respectivement une première (17) et une troisième (19) portion d'extension, forment respectivement un angle α tel que 40° ≤ α ≤ 120°.

8. Sculpture de bande de roulement selon les caractéristiques de l'une des revendications précédentes,
les deuxième (18) et quatrième (20) portions d'extension de la fine incision (16), qui délimitent respectivement une première (17) et une troisième (19) portion d'extension, forment respectivement avec la première (17) et la troisième (19) portion d'extension, délimitées par celles-ci, un angle β tel que 100° ≤ β ≤ 150°.

9. Sculpture de bande de roulement selon les caractéristiques de l'une des revendications précédentes,
le renflement s'étendant dans une direction perpendiculaire à un prolongement (n), formé par la deuxième portion d'extension radiale (23), du tracé de coupe de la première portion d'extension radiale (22) jusqu'à une distance maximale s du prolongement (n) tel que 0,5 mm ≤ s ≤ 2 mm.

10. Sculpture de bande de roulement selon les caractéristiques de l'une des revendications précédentes,
les première (17) et troisième (19) portions d'extension étant formées avec une longueur d'extension e telle que 2 mm ≤ e ≤ 6 mm.

11. Sculpture de bande de roulement selon les caractéristiques de l'une des revendications précédentes,
la fine incision (16) débouchant par une extrémité d'extension, en particulier par les deux extrémités d'extension, formées le long de sa première direction principale d'extension g dans une rainure, en particulier dans une rainure circonférentielle (10), délimitant l'élément de sculpture (12, 13).

12. Sculpture de bande de roulement selon les caractéristiques de l'une des revendications précédentes,
une courte portion d'extension de la longueur d'extension c de la fine incision (16), telle 2 mm ≤ c ≤ (b/2), mesurée dans la direction d'extension de la fine incision (16) se raccordant à la transition vers une rainure (10) délimitant l'élément de sculpture (12, 13) à l'intérieur de la largeur de contact au sol T_{A} le long de la ligne d'extension principale g à l'extérieur de la région d'extension,
courte portion d'extension dans laquelle le tracé de coupe est sensiblement rectiligne à partir de la surface radialement extérieure (21) jusqu'à la profondeur T₁, b formant la longueur d'extension de la région d'extension, mesurée dans la direction d'extension principale de la fine incision (16).

13. Sculpture de bande de roulement selon les caractéristiques de l'une des revendications précédentes,
l'élément de sculpture étant un élément de sculpture d'une bande de sculpture d'épaulement, en particulier un élément de bloc de sculpture (12) d'une rangée de blocs de sculpture d'épaulement (7).
